# EUROPEAN PATENT SPECIFICATION

(11) **EP 2 821 684 B1**
(45) Date of publication and mention of the grant of the patent: **28.03.2018**
(21) Application number: 13175204.0
(22) Date of filing: 05.07.2013
(51) Int. Cl.: F16L 25/00, H02G 3/06, F16L 41/12

(54) **MOUNTING BOX**
ANBRINGUNGSKASTEN
BOÎTIER DE MONTAGE

(43) Date of publication of application: 07.01.2015
(73) Proprietor: ABB Schweiz AG, 5400 Baden (CH)
(72) Inventor: Andersson, Johan, 06100 Porvoo (FI); Didriksson, Lars, 06100 Porvoo (FI); Tervo, Pekka, 06100 Porvoo (FI)
(74) Representative: Kolster Oy Ab

(56) References cited:
- EP-A1- 0 774 608
- EP-A2- 1 085 246
- US-A- 4 248 459
- US-B1- 7 871 109

## Description

### FIELD OF THE INVENTION

The present invention relates to a mounting box according to preamble of independent claim 1.

It is known in the art to provide a mounting box with attachment means for attaching an installation conduit having peripheral grooves on its outer surface to an installation aperture in a box case of the mounting box. Such a mounting box is known from US 7,871,109. It is not unusual that installation conduits having more than one diameter are used in a project. Also, it might be necessary to attach installation conduits of different sizes to a single mounting box. Therefore an electrician needs for one project a plurality of mounting boxes of different types and/or a plurality of separate attachment members of different sizes to be fixed on a mounting box.

### BRIEF DESCRIPTION OF THE INVENTION

An object of the present invention is to reduce number of component types needed for attaching installation conduits of different sizes to a mounting box.

The objects of the invention are achieved by a mounting box which is characterized by what is stated in the independent claim. The preferred embodiments of the invention are disclosed in the dependent claims.

The invention is based on the idea of providing two attachment members for an installation aperture, the first attachment member being adapted for attaching a smaller installation conduit and the second attachment member being adapted for attaching a bigger installation conduit. The first attachment member and the second attachment member are integral parts of the box case of the mounting box. It is possible to manufacture the entire mounting box from a single material as a monolithic unit.

An advantage of the mounting box of the invention is that it reduces the number of components types needed for attaching installation conduits of different sizes to a mounting box.

### BRIEF DESCRIPTION OF THE DRAWINGS

In the following the invention will be described in greater detail by means of preferred embodiments with reference to the attached drawings, in which
Figure 1 shows a mounting box according to an embodiment of the invention;
Figures 2A and 2B show an installation aperture of the mounting box of Figure 1 with and without a removable shield plug;
Figures 3A - 3C show a sectional view of a first attachment member during insertion of a first installation conduit as seen from lateral direction;
Figure 4A shows a front view of the mounting box of Figure 1 whose second attachment members have been enabled;
Figure 4B shows a sectional view of a second attachment member with a second installation conduit;

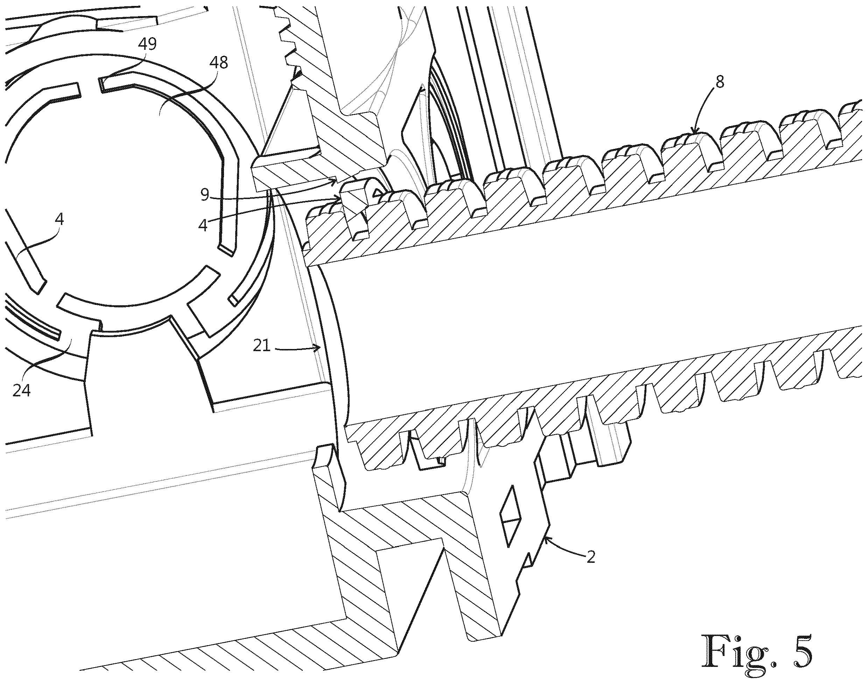

Figure 5 shows a sectional view of a detail of the mounting box of Figure 1 with a first installation conduit attached thereto;
Figure 6 shows a mounting box according to another embodiment of the invention;
Figure 7A shows a mounting box of Figure 6 with a first installation conduit attached thereto;
Figure 7B shows a sectional view of a detail of the mounting box of Figure 7A;
Figure 8A shows a mounting box of Figure 6 with a second installation conduit attached thereto; and
Figure 8B shows a sectional view of a detail of the mounting box of Figure 8A.

### DETAILED DESCRIPTION OF THE INVENTION

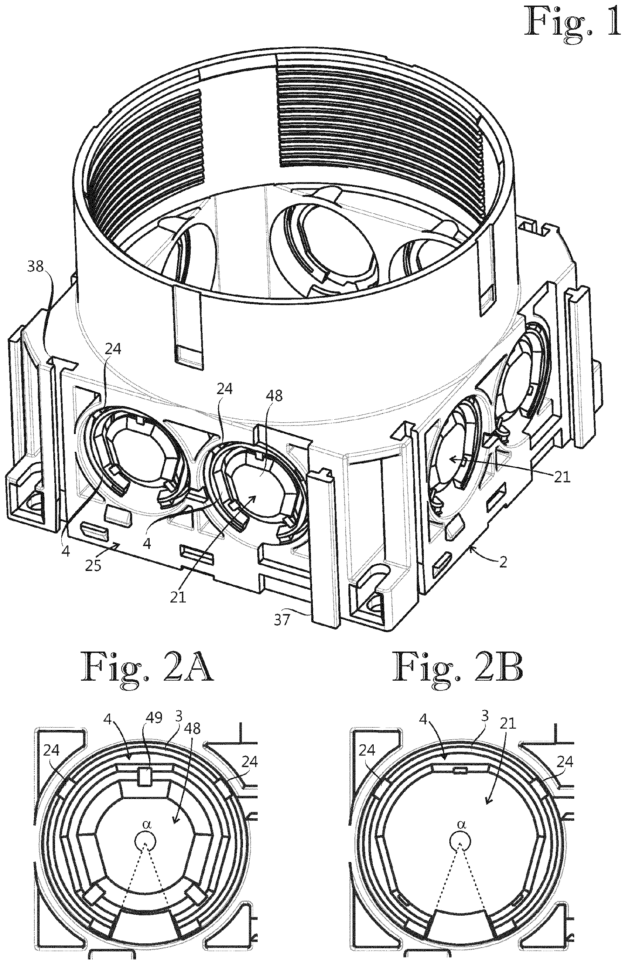

Figure 1 shows a mounting box comprising a box case 2, eight installation apertures 21, and attachment means for attaching installation conduits to the installation apertures 21. The box case 2 defines a mounting space inside thereof, the mounting space being adapted for accommodating an electrical component, such as a wall socket or a light switch. Each installation aperture 21 is adapted to provide a passage between exterior of the box case 2 and the mounting space.

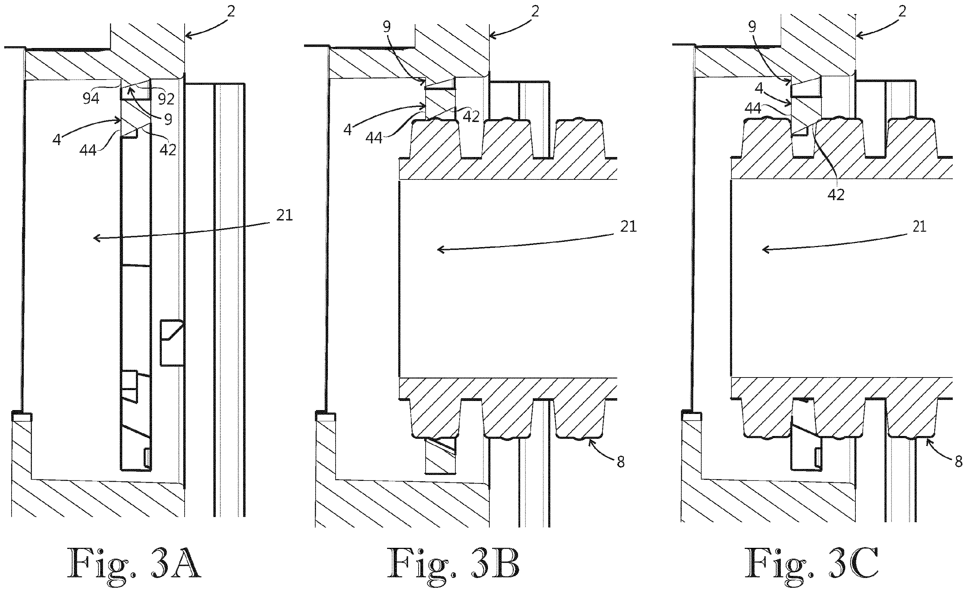

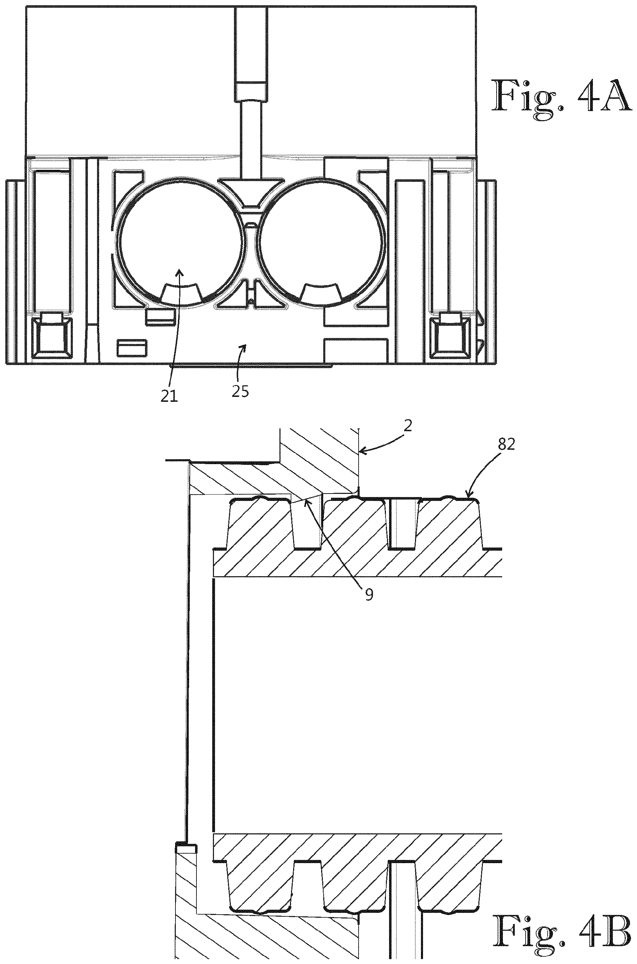

The attachment means comprises a first attachment member and a second attachment member for each installation aperture 21. The attachment means are integral part of the box case 2 such that the mounting box is made from a single material. Figures 2A and 2B show a first attachment member 4 from an axial direction and Figures 3A - 3C show the first attachment member 4 as a cross section from a lateral direction. A second attachment member 9 is best seen in Figure 4B. Both the first attachment member 4 and the second attachment member 9 are adapted to allow movement of an installation conduit through an installation aperture towards the mounting space and to resist reverse movement of the installation conduit.

In Figure 1 each installation aperture 21 is blocked by a removable shield plug 48 located radially inside corresponding first attachment member 4. Each removable shield plug 48 is an integral part of the box case 2. The removable shield plug 48 is adapted to be cut off in order to enable introducing of a first installation conduit 8 into the installation aperture 21. Cutting off the removable shield plug 48 is easy since the removable shield plug 48 is only supported to corresponding first attachment member 4 through three narrow supporting members 49. Idea is that an electrician removes required number of removable shield plugs 48 while the rest removable shield plugs protect the mounting space against dirt and foreign bodies.

Figure 2A shows an enlargement of the installation aperture 21 with a removable shield plug 48. Figure 2B shows an enlargement of the installation aperture 21 without the removable shield plug. Figures 2A and 2B show that the attachment means comprises four radial supporting members 24 for a first attachment member 4. The first attachment member 4 is supported to the box case 2 through corresponding radial supporting members 24.

The first attachment member 4 is adapted for attaching a first installation conduit 8 having a first outer diameter to an installation aperture 21 of the box case 2, and the second attachment member 9 is adapted for attaching a second installation conduit 82 having a second outer diameter to said installation aperture 21 of the box case 2. The first attachment member 4 is adapted to enter at least partially a peripheral groove on an outer surface of the first installation conduit 8. The second attachment member 9 is adapted to enter at least partially a peripheral groove on an outer surface of the second installation conduit 82. At a peripheral groove the installation conduit has a smaller outer diameter than next to the peripheral groove.

Figures 3A - 3C show a sectional view of the first attachment member 4 during insertion of a first installation conduit 8 into the installation aperture 21. The first attachment member 4 has an access surface 42 and a stopping surface 44. The access surface 42 faces exterior of the box case 2 and has a form of a funnel segment. In other words the access surface 42 is a bevelled surface whose radial inner diameter decreases in a direction from the exterior of the box case 2 towards the mounting space. The access surface 42 is adapted to co-operate with an outer surface of a first installation conduit 8 when the first installation conduit 8 is introduced into the installation aperture 21, the co-operation being adapted to move the first attachment member 4 in radial direction from a resting position of the first attachment member 4 such that cross-sectional area of the installation aperture 21 increases.

The stopping surface 44 is a substantially planar surface facing the mounting space and extending substantially on a plane perpendicular to an axial direction of the installation aperture 21. The axial direction of the installation aperture 21 is the direction in which an installation conduit is pushed into the installation aperture 21. The stopping surface 44 is adapted to co-operate with a peripheral groove on an outer surface of the first installation conduit 8 attached to the installation aperture 21 when an outwards directed force is exerted to the first installation conduit 8, the co-operation being adapted to resist movement of the first installation conduit 8 outwards through the installation aperture 21.

There is always some friction between an attachment member and an installation conduit moving through the attachment member. Herein it is defined that an attachment member resists outwards movement of an installation conduit when the resisting force is at least 200 % greater than a resisting force during inwards movement of the installation conduit.

In Figure 3A the first attachment member 4 is in its resting position. Figure 3B shows a situation in which a first installation conduit 8 is being introduced into the installation aperture 21. In Figure 3B the first attachment member 4 is located radially further from a centre line of the installation aperture 21 than in Figure 3A such that cross-sectional area of the installation aperture 21 has increased. In Figure 3B the first attachment member 4 is in contact with an outer surface of the first installation conduit 8 at a point where an outer diameter of the first installation conduit 8 is at its maximum. Between situations of Figures 3A and 3B the bevelled access surface 42 has co-operated with an outer surface of the first installation conduit 8 such that the first attachment member 4 has bent in order to increase the cross-sectional area of the installation aperture 21.

In Figure 3C the first installation conduit 8 has been pushed deeper into the installation aperture 21. The first attachment member 4 has substantially returned to its resting position due to its elasticity and has partially entered a peripheral groove on an outer surface of the first installation conduit 8. If one now tries to pull the first installation conduit 8 out of the box case 2 the stopping surface 44 co-operates with a peripheral groove on an outer surface of the first installation conduit 8. To be more specific, the stopping surface 44 collides with a ring shaped projection on the outer surface of the first installation conduit 8. These ring shaped projections alternate with the peripheral grooves. An outer diameter of a ring shaped projection is greater than an outer diameter of an adjacent peripheral groove.

The first attachment member 4 has a form of a ring segment. Each first attachment member 4 surrounds corresponding installation aperture 21 in an engagement angle α. In the mounting box shown in Figure 1 the engagement angle α is roughly 320°. In an alternative embodiment the engagement angle may be 180° or higher. In the embodiment of Figure 1 the first attachment member 4 is a one-piece ring segment. It is also possible to divide a first attachment member having a form of a ring segment into several partial ring segments.

Figures 2A and 2B show that a combined peripheral length of the radial supporting members 24 is less than fifth of a peripheral length of the first attachment member 4. Peripheral slits 3 between the first attachment member 4 and the box case 2 facilitate stretching of the first attachment member 4 radially outwards.

The second attachment member 9 has a form of a ring segment. Each second attachment member 9 is formed on a surface of the box case 2 surrounding corresponding installation aperture 21. Radial distance of the second attachment member 9 from the centre line of the installation aperture 21 is greater than radial distance of the first attachment member 4 from the centre line of the installation aperture 21. The second attachment member 9 is adapted to engage an outer surface of a second installation conduit 82 which has a greater outer diameter than the first installation conduit 8 whose outer surface the first attachment member 4 is adapted to engage. Axial position of the second attachment member 9 is substantially the same as axial position of the first attachment member 4.

The second attachment member 9 surrounds corresponding installation aperture 21 in a second engagement angle. In the mounting box shown in Figure 1 the second engagement angle is roughly 90°. The second engagement angle is smaller than the engagement angle α because the second attachment member 9 cannot move radially outwards during insertion of an installation conduit. It is possible to divide the second attachment member into several partial ring segments.

Each second attachment member 9 is adapted to be enabled by removing corresponding first attachment member 4. A first attachment member 4 may be removed by cutting the corresponding radial supporting members 24. Figure 4A shows a front view of the mounting box of Figure 1 whose second attachment members 9 have been enabled by cutting the radial supporting members 24. Figure 4B shows a sectional view of the second attachment member 9 of Figure 4A with a second installation conduit 82 attached thereto.

The second attachment member 9 has a similar basic form as the first attachment member 4. The second attachment member 9 has an access surface 92 and a stopping surface 94. The access surface 92 faces exterior of the box case 2 and has a form of a funnel segment. The access surface 92 is adapted to co-operate with an outer surface of a second installation conduit 82 when the second installation conduit 82 is introduced into the installation aperture. Since the second attachment member 9 cannot move in the radial direction the co-operation between the access surface 92 and the outer surface of the second installation conduit 82 is based on elasticity thereof.

The stopping surface 94 is a substantially planar surface facing the mounting space and extending substantially on a plane perpendicular to the axial direction of the installation aperture. The operating principle of the stopping surface 94 is identical to the operating principle of the stopping surface 44 described above.

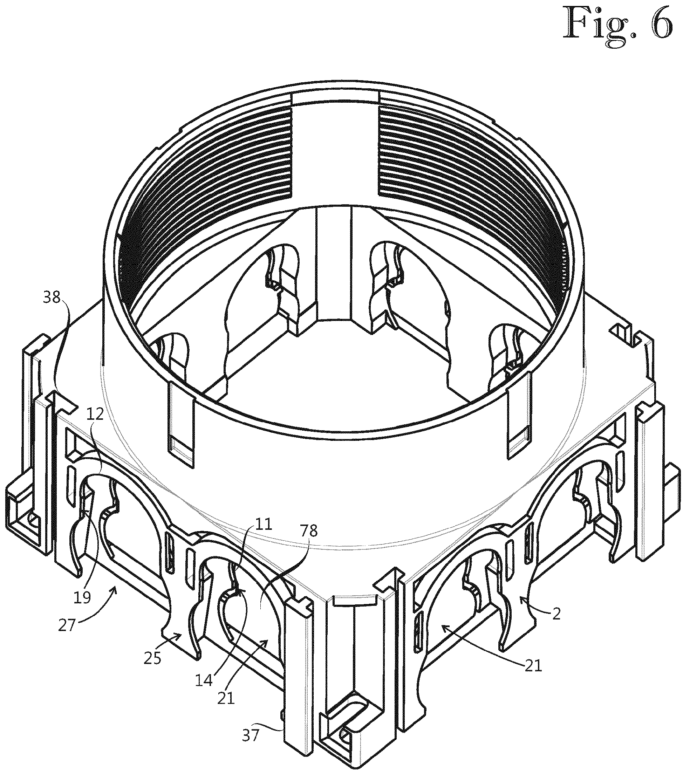

Figure 6 shows a mounting box according to another embodiment of the invention. Except for the attachment means and removable shield plugs the mounting box of Figure 6 is identical to the mounting box of Figure 1.

The attachment means of the mounting box of Figure 6 comprises a first attachment 14 member and a second attachment 19 member for each installation aperture 21. The first attachment member 14 comprises a pair of first wall segments 11 whose mutual distance is smaller than an outer diameter of a first installation conduit. The second attachment member 19 comprises a pair of second wall segments 12 whose mutual distance is smaller than an outer diameter of a second installation conduit, the outer diameter of the second installation conduit being larger than the outer diameter of the first installation conduit. The first wall segments 11 and the second wall segments 12 are part of the box case 2.

The first wall segments 11 extend on a first wall segment plane. The second wall segments 12 extend on a second wall segment plane. The first wall segment plane is parallel to the second wall segment plane. The first wall segment plane extends at a distance from the second wall segment plane. Both the first wall segment plane and the second wall segment plane extend perpendicular to the axial direction of corresponding installation apertures.

Thickness of the first wall segments 11 is less than axial dimension of a peripheral groove on an outer surface of a first installation conduit. Thickness of the second wall segments 12 is less than axial dimension of a peripheral groove on an outer surface of a second installation conduit. The first wall segments 11 are adapted to enter at least partially the peripheral groove on the outer surface of the first installation conduit and the second wall segments 12 are adapted to enter at least partially the peripheral groove on the outer surface of the second installation conduit.

In Figure 6 each installation aperture 21 is blocked by a removable shield plug 78. The removable shield plug 78 is adapted to be at least partially removed in order to enable introducing of an installation conduit into the installation aperture 21.

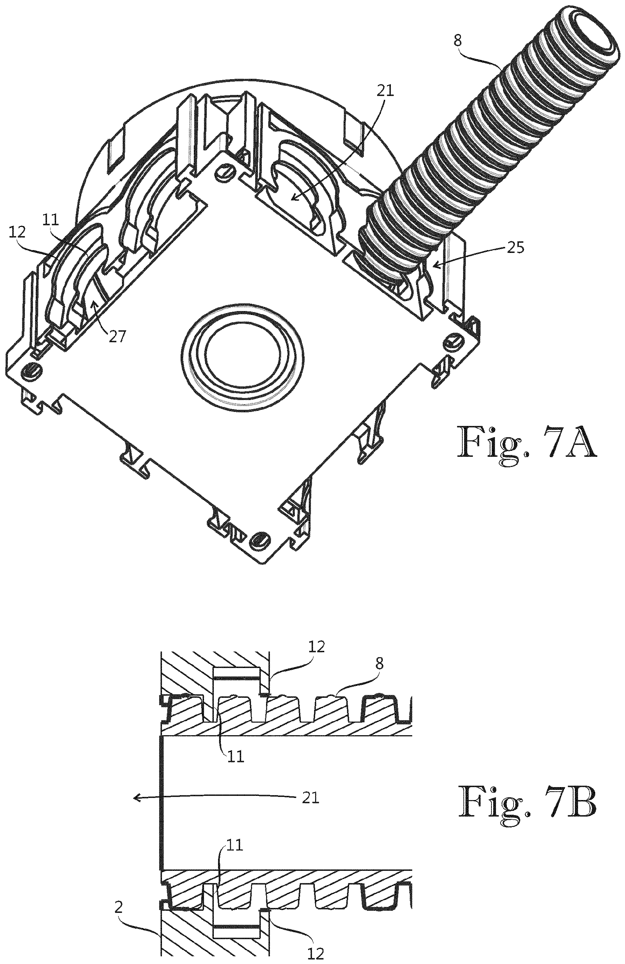

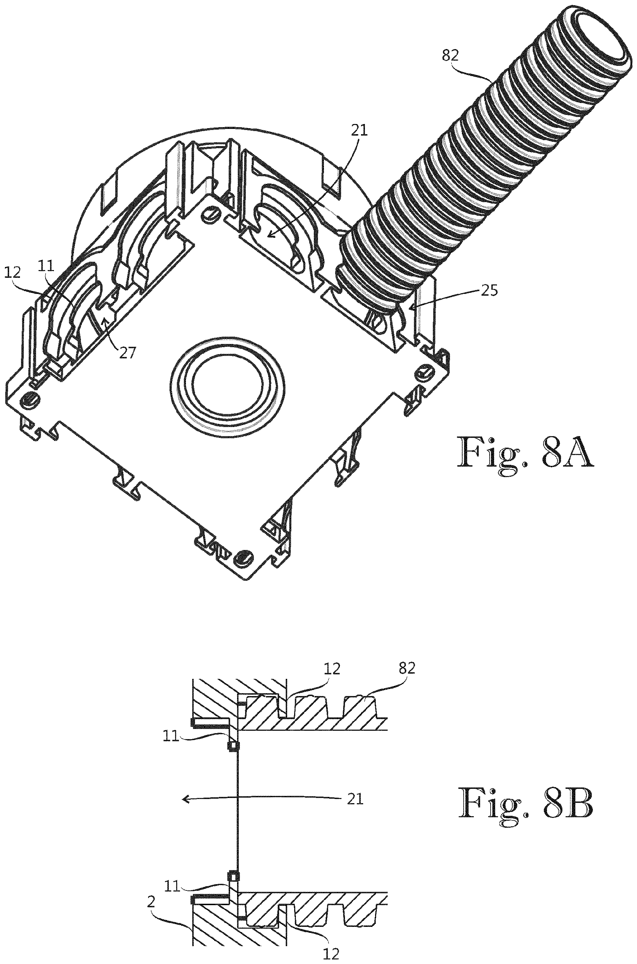

Figure 7A shows a mounting box of Figure 6 with a first installation conduit 8 attached thereto. Figure 8A shows a mounting box of Figure 6 with a second installation conduit 82 attached thereto. In Figures 7A and 8A all removable shield plugs 78 have been removed.

Figures 7A and 8A show that the box case 2 comprises a bottom aperture 27 through which the box case 2 is adapted to receive an end of the first installation conduit 8 to a position which is located axially inwards of the pair of first wall segments 11 and to receive an end of the second installation conduit 82 to a position which is located axially inwards of the pair of second wall segments 12. The bottom aperture 27 is adapted to receive an end of the first installation conduit 8 and an end of the second installation conduit 82 in a direction perpendicular to both the axial direction of respective installation conduit and the axial direction of the installation aperture.

Figure 7B shows a sectional view of attachment means of the mounting box of Figure 7A, and Figure 8B shows a sectional view of attachment means of the mounting box of Figure 8A. Figure 7B shows that the first wall segments 11 prevent axial movement of the first installation conduit 8. Figure 8B shows that the second wall segments 12 prevent axial movement of the second installation conduit 82.

The first attachment member 14 is adapted to lock a first installation conduit 8 to the box case 2, and the second attachment member 19 is adapted to lock a second installation conduit 82 to the box case 2. This means that the first attachment member 14 is adapted to prevent radial outwards movement of the first installation conduit 8 attached to an installation aperture 21 corresponding to the first attachment member 14. In a same way the second attachment member 19 is adapted to prevent radial outwards movement of the second installation conduit 82 attached to an installation aperture 21 corresponding to the second attachment member 19. Said locking feature may be realized by providing a pair of wall segments with a narrow section and/or by forming at least one locking protrusion adjacent the attachment members.

A first attachment member 14 and corresponding second attachment member 19 are overlapping attachment members. It is only possible to attach a first installation conduit with the first attachment member 14 or to attach a second installation conduit with the second attachment member 19.

In an embodiment all parts of a mounting box are made of same material such as plastic. It is possible to manufacture the entire mounting box with a single injection moulding process.

In the embodiments shown in Figures 1 and 6 the box case 2 has a base portion whose cross section is substantially a square. The attachment means are located within the square. Therefore the mounting boxes have a form which allows placing them closely side by side. Each box case 2 comprises connection means for connecting the box case 2 to an adjacent box case. The connection means comprises projections 37 having a T-shaped cross section and slots 38 having a T-shaped cross section. Electric wires may pass from one box case to adjacent one through the installation apertures.

Side walls 25 of the base portion of the box case 2 are substantially planar. Each side wall 25 is provided with two installation apertures 21. Axial direction of each installation aperture 21 extends perpendicular to corresponding side wall 25. The attachment means are located within the side walls 25. None of the attachment members projects from corresponding side wall 25. In the embodiment of Figure 6 the second wall segments 12 are part of the side wall 25.

It will be obvious to a person skilled in the art that the inventive concept can be implemented in various ways. The invention and its embodiments are not limited to the examples described above but may vary within the scope of the claims.

## Claims

1. A mounting box comprising:
a box case (2) defining a mounting space inside thereof, the box case (2) comprising at least one installation aperture (21) adapted to provide a passage between an exterior of the box case (2) and the mounting space; and
attachment means comprising a first attachment member (4, 14) adapted for attaching a first installation conduit (8) having a first outer diameter to an installation aperture (21) of the box case (2), the first attachment member (4, 14) being adapted to enter at least partially a peripheral groove on an outer surface of the first installation conduit (8), and a second attachment member (9, 19) adapted for attaching a second installation conduit (82) having a second outer diameter to said installation aperture (21) of the box case (2), the second attachment member (9, 19) being adapted to enter at least partially a peripheral groove on an outer surface of the second installation conduit (82), **characterized in that** the attachment means are integral part of the box case (2), and the second outer diameter is greater than the first outer diameter.

2. A mounting box according to claim 1, **characterized in that** the box case (2) and each attachment member (4, 14, 9, 19) are made from a same material.

3. A mounting box according to claim 1 or 2, **characterized in that** both the first attachment member (4) and the second attachment member (9) has an access surface (42, 92) and a stopping surface (44, 94), each access surface (42, 92) being an bevelled surface adapted to co-operate with an outer surface of corresponding installation conduit (8, 82) when it is introduced into the installation aperture (21), the stopping surface (44, 94) being adapted to co-operate with a peripheral groove on an outer surface of the corresponding installation conduit (8, 82) attached to the installation aperture (21) when an outwards directed force is exerted to the corresponding installation conduit (8, 82), the co-operation being adapted to resist movement of the installation conduit (8, 82) outwards through the installation aperture (21).

4. A mounting box according to claim 3, **characterized in that** the first attachment member (4) and the second attachment member (9) each has a form of a ring segment.

5. A mounting box according to claim 3 or 4, **characterized in that** the stopping surface (44, 94) of both the first attachment member (4) and the second attachment member (9) is a substantially planar surface of the attachment member (4, 9) facing the mounting space and extending substantially on a plane perpendicular to an axial direction of the installation aperture (21).

6. A mounting box according to any one of claims 3 to 5, **characterized in that** the second attachment member (9) is formed on a surface of the box case (2) surrounding the corresponding installation aperture (21).

7. A mounting box according to any one of claims 3 to 6, **characterized in that** the attachment means further comprises a plurality of radial supporting members (24) through which the first attachment member (4) is supported to the box case (2).

8. A mounting box according to claim 7, **characterized in that** the co-operation between the access surface (42) of the first attachment member (4) and an outer surface of a first installation conduit (8) is adapted to move the first attachment member (4) in radial direction from a resting position of the first attachment member (4) such that cross-sectional area of the installation aperture (21) increases.

9. A mounting box according to claim 7 or 8, **characterized in that** the second attachment member (9) is adapted to be enabled by cutting off corresponding first attachment member (4).

10. A mounting box according to claim 1 or 2, **characterized in that** the first attachment member (14) comprises a pair of first wall segments (11) whose mutual distance is smaller than the first outer diameter, and the second attachment member (19) comprises a pair of second wall segments (12) whose mutual distance is smaller than the second outer diameter, the first wall segments (11) being adapted to enter at least partially a peripheral groove on an outer surface of the first installation conduit (8) and the second wall segments (12) being adapted to enter at least partially a peripheral groove on an outer surface of the second installation conduit (82).

11. A mounting box according to claim 10, **characterized in that** the box case (2) comprises a bottom aperture (27) through which the box case (2) is adapted to receive an end of the first installation conduit (8) to a position which is located axially inwards of the pair of first wall segments (11) and to receive an end of the second installation conduit (82) to a position which is located axially inwards of the pair of second wall segments (12).

12. A mounting box according to claim 10 or 11, **characterized in that** the first attachment member (14) is adapted to lock a first installation conduit (8) to the box case (2), and the second attachment member (19) is adapted to lock a second installation conduit (82) to the box case (2).

13. A mounting box according to any preceding claim, **characterized in that** the box case (2) has a base portion whose cross section is substantially a square, the base portion comprising the at least one installation aperture (21), the attachment means being located within the square.

## Patentansprüche

1. Verteilerdose, die umfasst:
ein Dosen-Gehäuse (2), das einen Verteiler-Raum in seinem Inneren aufweist, wobei das Dosen-Gehäuse (2) wenigstens eine Installations-Öffnung (21) umfasst, die so eingerichtet ist, dass sie Durchlass zwischen einer Außenseite des Dosen-Gehäuses (2) und dem Verteiler-Raum ermöglicht; sowie
Anbringungseinrichtungen, die ein erstes Anbringungs-Element (4, 14) umfassen, das zum Anbringen eines ersten Installations-Rohrs (8), das einen ersten Außendurchmesser hat, an einer Installations-Öffnung (21) des Dosen-Gehäuses (2) eingerichtet ist, wobei das erste Anbringungs-Element (4, 14) so eingerichtet ist, dass es wenigstens teilweise in eine Umfangsnut an einer Außenfläche des ersten Installations-Rohrs (8) eintritt, sowie ein zweites Anbringungs-Element (9, 19), das zum Anbringen eines zweiten Installations-Rohrs (82), das einen zweiten Außendurchmesser hat, an der Installations-Öffnung (21) des Dosen-Gehäuses (2) eingerichtet ist, wobei das zweite Anbringungs-Element (9, 19) so eingerichtet ist, dass es wenigstens teilweise in eine Umfangsnut an einer Außenfläche des ersten Installations-Rohrs (82) eintritt,
**dadurch gekennzeichnet, dass** die Anbringungseinrichtungen integraler Teil des Dosen-Gehäuses (2) sind und der zweite Außendurchmesser größer ist als der erste Außendurchmesser.

2. Verteilerdose nach Anspruch 1, **dadurch gekennzeichnet, dass** das Dosen-Gehäuse (2) und jedes Anbringungs-Element (4, 14, 9, 19) aus dem gleichen Material bestehen.

3. Verteilerdose nach Anspruch 1 oder 2, **dadurch gekennzeichnet, dass** sowohl das erste Anbringungs-Element (4) als auch das zweite Anbringungs-Element (9) eine Zugangs-Fläche (42, 92) und eine Anschlag-Fläche (44, 94) aufweisen, wobei jede Zugangs-Fläche (42, 92) eine abgeschrägte Fläche ist, die so eingerichtet ist, dass sie mit einer Außenfläche eines entsprechenden Installations-Rohrs (8, 82) zusammenwirkt, wenn es in die Installations-Öffnung (21) eingeführt wird, die Anschlag-Fläche (44, 94) so eingerichtet ist, dass sie mit einer Umfangsnut an einer Außenfläche des entsprechenden Installations-Rohrs (8, 82) zusammenwirkt, das an der Installations-Öffnung (21) angebracht ist, wenn eine nach außen gerichtete Kraft auf das entsprechende Installations-Rohr (8, 82) ausgeübt wird, und das Zusammenwirken so eingerichtet ist, dass Bewegung des Installations-Rohrs (8, 82) über die Installations-Öffnung (21) nach außen Widerstand entgegengesetzt wird.

4. Verteilerdose nach Anspruch 3, **dadurch gekennzeichnet, dass** das erste Anbringungs-Element (4) und das zweite Anbringungs-Element (9) jeweils die Form eines Ringsegmentes haben.

5. Verteilerdose nach Anspruch 3 oder 4, **dadurch gekennzeichnet, dass** die Anschlag-Fläche (44, 94) sowohl des ersten Anbringungs-Elementes (4) als auch des zweiten Anbringungs-Elementes (9) eine im Wesentlichen plane Fläche des Anbringungs-Elementes (4, 9) ist, die dem Verteiler-Raum zugewandt ist und sich im Wesentlichen auf einer Ebene senkrecht zu einer axialen Richtung der Installations-Öffnung (21) erstreckt.

6. Verteilerdose nach einem der Ansprüche 3 bis 5, **dadurch gekennzeichnet, dass** das zweite Anbringungs-Element (9) an einer Fläche des Dosen-Gehäuses (2) ausgebildet ist, die die entsprechende Installations-Öffnung (21) umschließt.

7. Verteilerdose nach einem der Ansprüche 3 bis 6, **dadurch gekennzeichnet, dass** die Anbringungseinrichtungen des Weiteren eine Vielzahl radialer Trage-Elemente (24) umfassen, über die das erste Anbringungselement (4) an dem Dosen-Gehäuse (2) getragen wird.

8. Verteilerdose nach Anspruch 7, **dadurch gekennzeichnet, dass** das Zusammenwirken zwischen der Zugangs-Fläche (42) des ersten Anbringungs-Elementes (4) und einer Außenfläche eines ersten Installations-Rohrs (8) so eingerichtet ist, dass das erste Anbringungs-Element (4) in radialer Richtung aus einer Ruheposition des ersten Anbringungs-Elementes (4) so bewegt wird, dass eine Querschnittsfläche der Installations-Öffnung (21) größer wird.

9. Verteilerdose nach Anspruch 7 oder 8, **dadurch gekennzeichnet, dass** das zweite Anbringungs-Element (9) so eingerichtet ist, dass es durch Abschneiden eines entsprechenden ersten Anbringungs-Elementes (4) freigegeben wird.

10. Verteilerdose nach Anspruch 1 oder 2, **dadurch gekennzeichnet, dass** das erste Anbringungs-Element (14) ein Paar erster Wand-Segmente (11) umfasst, deren Abstand zueinander kleiner ist als der erste Außendurchmesser, und das zweite Anbringungs-Element (19) ein paar zweiter Wand-Segmente (12) umfasst, deren Abstand zueinander kleiner ist als der zweite Außendurchmesser, wobei die ersten Wand-Segmente (11) so eingerichtet sind, dass sie wenigstens teilweise in eine Umfangsnut an einer Außenfläche des ersten Installations-Rohrs (8) eintreten, und die zweiten Wand-Segmente (12) so eingerichtet sind, dass sie wenigstens teilweise in eine Umfangsnut an einer Außenfläche des zweiten Installations-Rohrs (82) eintreten.

11. Verteilerdose nach Anspruch 10, **dadurch gekennzeichnet, dass** das Dosen-Gehäuse (2) eine untere Öffnung (27) umfasst, die so eingerichtet ist, dass das Dosen-Gehäuse (2) darüber ein Ende des ersten Installations-Rohrs (8) an einer Position aufnimmt, die axial innerhalb des Paars erster Wand-Segmente (11) liegt, und ein Ende des zweiten Installations-Rohrs (82) an einer Position aufnimmt, die axial innerhalb des Paars zweiter Wand-Segmente (12) liegt.

12. Verteilerdose nach Anspruch 10 oder 11, **dadurch gekennzeichnet, dass** das erste Anbringungs-Element (14) so eingerichtet ist, dass es ein erstes Installations-Rohr (8) an dem Dosen-Gehäuse (2) arretiert, und das zweite Anbringungs-Element (19) so eingerichtet ist, dass es ein zweites Installations-Rohr (82) an dem Dosen-Gehäuse (2) arretiert.

13. Verteilerdose nach einem der vorangehenden Ansprüche, **dadurch gekennzeichnet, dass** das Dosen-Gehäuse (2) einen Sockel-Abschnitt hat, dessen Querschnitt im Wesentlichen quadratisch ist, wobei der Sockel-Abschnitt die wenigstens eine Installations-Öffnung (21) umfasst und die Anbringungseinrichtungen innerhalb des Quadrates angeordnet sind.

## Revendications

1. Boîtier de montage comprenant :
une enveloppe de boîtier (2) qui définit un espace de montage à l'intérieur de celle-ci, l'enveloppe de boîtier (2) comprenant au moins une ouverture d'installation (21) adaptée de façon à fournir un passage entre l'extérieur de l'enveloppe de boîtier (2) et l'espace de montage ; et
des moyens de fixation qui comprennent un premier élément de fixation (4, 14) adapté à la fixation d'un premier conduit d'installation (8) qui présente un premier diamètre extérieur vers une ouverture d'installation (21) de l'enveloppe de boîtier (2), le premier élément de fixation (4, 14) étant adapté de façon à pénétrer en partie au moins dans une rainure périphérique sur une surface extérieure du premier conduit d'installation (8), et un second élément de fixation (9, 19) adapté à la fixation d'un second conduit d'installation (82) qui présente un second diamètre extérieur vers ladite ouverture d'installation (21) de l'enveloppe de boîtier (2), le second élément de fixation (9, 19) étant adapté de façon à pénétrer en partie au moins dans une rainure périphérique sur une surface extérieure du second conduit d'installation (82) ;
**caractérisé en ce que** les moyens de fixation sont d'une pièce avec l'enveloppe de boîtier (2), et le second diamètre extérieur est supérieur au premier diamètre extérieur.

2. Boîtier de montage selon la revendication 1, **caractérisé en ce que** l'enveloppe de boîtier (2) et chaque élément de fixation (4, 14, 9, 19) sont réalisés dans un même matériau.

3. Boîtier de montage selon la revendication 1 ou la revendication 2, **caractérisé en ce que** le premier élément de fixation (4) et le second élément de fixation (9) présentent tous deux une surface d'accès (42, 92) et une surface d'arrêt (44, 94), chaque surface d'accès (42, 92) étant une surface biseautée adaptée de façon à coopérer avec une surface extérieure d'un conduit d'installation correspondant (8, 82) quand il est introduit dans l'ouverture d'installation (21), la surface d'arrêt (44, 94) étant adaptée de façon à coopérer avec une rainure périphérique sur une surface extérieure du conduit d'installation correspondant (8, 82) fixé à l'ouverture d'installation (21) quand une force dirigée vers l'extérieur est exercée sur le conduit d'installation correspondant (8, 82), la coopération étant adaptée de façon à résister à un déplacement du conduit d'installation (8, 82) vers l'extérieur à travers l'ouverture d'installation (21).

4. Boîtier de montage selon la revendication 3, **caractérisé en ce que** le premier élément de fixation (4) et le second élément de fixation (9) présentent une forme de segment annulaire.

5. Boîtier de montage selon la revendication 3 ou la revendication 4, **caractérisé en ce que** la surface d'arrêt (44, 94) du premier élément de fixation (4) et du second élément de fixation (9), est une surface sensiblement plane de l'élément de fixation (4, 9) qui fait face à l'espace de montage, et qui s'étend sensiblement dans un plan perpendiculaire à la direction axiale de l'ouverture d'installation (21).

6. Boîtier de montage selon l'une quelconque des revendications 3 à 5, **caractérisé en ce que** le second élément de fixation (9) est formé sur une surface de l'enveloppe de boîtier (2) qui entoure l'ouverture d'installation correspondante (21).

7. Boîtier de montage selon l'une quelconque des revendications 3 à 6, **caractérisé en ce que** les moyens de fixation comprennent en outre une pluralité d'éléments de support radiaux (24) grâce auxquels le premier élément de fixation (4) est supporté sur l'enveloppe de boîtier (2).

8. Boîtier de montage selon la revendication 7, **caractérisé en ce que** la coopération entre la surface d'accès (42) du premier élément de fixation (4) et une surface extérieure d'un premier conduit d'installation (8), est adaptée de façon à déplacer le premier élément de fixation (4) dans la direction radiale à partir d'une position de repos du premier élément de fixation (4) de telle sorte que la section transversale de l'ouverture d'installation (21) augmente.

9. Boîtier de montage selon la revendication 7 ou la revendication 8, **caractérisé en ce que** le second élément de fixation (9) est adapté à une mise en service en coupant le premier élément de fixation correspondant (4).

10. Boîtier de montage selon la revendication 1 ou la revendication 2, **caractérisé en ce que** le premier élément de fixation (14) comprend une paire de premiers segments de paroi (11) dont la distance mutuelle est inférieure au premier diamètre extérieur, et le second élément de fixation (19) comprend une paire de seconds segments de paroi (12) dont la distance mutuelle est inférieure au second diamètre extérieur, les premiers segments de paroi (11) étant adaptés de façon à pénétrer en partie au moins dans une rainure périphérique sur une surface extérieure du premier conduit d'installation (8), et les seconds segments de paroi (12) étant adaptés de façon à pénétrer en partie au moins dans une rainure périphérique sur une surface extérieure du second conduit d'installation (82).

11. Boîtier de montage selon la revendication 10, **caractérisé en ce que** l'enveloppe de boîtier (2) comprend une ouverture inférieure (27) à travers laquelle l'enveloppe de boîtier (2) est adaptée de façon à recevoir une extrémité du premier conduit d'installation (8) dans une position qui se situe de manière axiale vers l'intérieur de la paire de premiers segments de paroi (11), et à recevoir une extrémité du second conduit d'installation (82) dans une position qui se situe de manière axiale vers l'intérieur de la paire de seconds segments de paroi (12).

12. Boîtier de montage selon la revendication 10 ou la revendication 11, **caractérisé en ce que** le premier élément de fixation (14) est adapté de façon à bloquer un premier conduit d'installation (8) vis-à-vis de l'enveloppe de boîtier (2), et le second élément de fixation (19) est adapté de façon à bloquer un second conduit d'installation (82) vis-à-vis de l'enveloppe de boîtier (2).

13. Boîtier de montage selon l'une quelconque des revendications précédentes, **caractérisé en ce que** l'enveloppe de boîtier (2) présente une partie base dont la section transversale est sensiblement en forme de carré, la partie base comprenant la ou les ouvertures d'installation (21), les moyens de fixation se situant à l'intérieur du carré.
